# EUROPÄISCHE PATENTSCHRIFT

(11) **EP 1 399 226 B1**
(45) Veröffentlichungstag und Bekanntmachung des Hinweises auf die Patenterteilung: **14.12.2005**
(21) Anmeldenummer: 02767149.4
(22) Anmeldetag: 13.06.2002
(51) Int. Cl.: A63B 55/08, A63B 55/00

(54) **GOLFBAG-TROLLEY-KOMBINATION**
GOLF BAG AND TROLLEY COMBINATION
ENSEMBLE SAC DE GOLF/CHARIOT DE GOLF

(30) Priorität: 20.06.2001 DE 10129724
(43) Veröffentlichungstag der Anmeldung: 24.03.2004
(73) Patentinhaber: Volker, Von, Petersdorff, 30916 Isernhagen (DE); Andresen, Gerd, 30916 Isernhagen (DE)
(72) Erfinder: Volker, Von, Petersdorff, 30916 Isernhagen (DE); Andresen, Gerd, 30916 Isernhagen (DE)
(74) Vertreter: König, Norbert
(86) Internationale Anmeldenummer: PCT/EP2002/006478
(87) Internationale Veröffentlichungsnummer: WO 2003/000353

(56) Entgegenhaltungen:
- WO-A-01/03779
- DE-U- 29 820 017
- FR-A- 2 641 195
- FR-A- 2 720 912
- GB-A- 917 877
- GB-A- 2 134 797
- US-A- 2 760 782
- US-A- 3 014 732
- US-A- 3 451 690
- US-A- 4 344 660
- US-A- 5 071 147
- US-A- 6 161 692

## Beschreibung

Die Erfindung betrifft eine Golfbag-Trolley-Kombination gemäß Oberbegriff des Anspruchs 1.

Es sind verschiedene Golfbags bekannt, die einen Bag-Korpus mit mehreren Unterteilungen für die Golfschläger aufweisen und mit Außentaschen für Golfbälle, Handschuhe, Tees etc. ausgestattet sind. Die Golfbags sind als Tragebag und/oder für die Anbringung an einem Golfbag-Trolley ausgebildet, der auch zusammenklappbar ausgebildet sein kann.

Es sind ferner Golf-Trolley-Kombinationen mit abklappbar an einem Gestell angebrachten Rädern und teleskopartig zusammenschiebbaren Griffstangen bekannt.

In der Regel sind für die Golfbags noch Bag-Hauben vorgesehen.

Für den Transport, insbesondere mit dem Flugzeug, Zug oder Auto sind Reisetaschen mit oder ohne Räder bekannt, die das Golfbag samt Schläger, Haube und Zubehör aufnehmen, ggf. auch die Trolleys. Die Golfbags, Hauben und Reisetaschen bestehen in der Regel aus einem Kunststoffmaterial, meist Nylon, und die Fahrgestelle der Trolleys aus leichten Metallprofilen.

Die bekannten Golfbags nebst Zubehör weisen Nachteile auf. Die Haube und die Reisetasche bieten für die rauhe Handhabung beim Beladen und Entladen für den Transport und beim Transport mit dem Flugzeug oder dem Zug keinen ausreichenden Schutz vor Beschädigungen der Golfschläger. Es besteht insbesondere die Gefahr, dass Schlägerköpfe abbrechen und das Golfbag, die Haube und die Reisetasche selbst beschädigt werden. Die Außentaschen des Golfbags und die Reisetaschen weisen anfällige Reißverschlüsse und die Hauben leicht ausreißbare Druckknopfverschlüsse auf. Die Trolleys müssen in der Regel separat transportiert werden, wenn nicht teure Golfbag-Trolley-Kombinationen benutzt werden, wobei jeweils die Gefahr der Beschädigung der Trolleys besteht, oder es müssen am Bestimmungsort Trolleys teuer gemietet werden.

Die US 2 760 782 offenbart eine Golfbag-Trolley-Kombination, bei der die Räder mitsamt Gestell in einen Hohlkörper einklappbar sind und die Golfschlägerschäfte in sämtliche Bereiche des Hohlkörpers zwischen einer Außenwand und einer Innenwand einsteckbar sind.

Durch die WO 01/03779 A1 ist ein Golfbag bekannt, das ein Karussell zur Aufnahme der Golfschläger aufweist, welches mit einer Antriebseinrichtung versehen ist. Die Räder sind steckbar ausgebildet. Für Schuhe und für die Räder ist ein seitliches, gemeinsames, längs verlaufendes Staufach vorgesehen.

Die Aufgabe der vorliegenden Erfindung besteht darin, eine Golfbag-Trolley-Kombination so auszubilden, dass Golfschläger, Trolleys und auch das Golfbag selbst beim Transport weitestgehend gegen Beschädigungen geschützt sind.

Diese Aufgabe wird durch die Erfindung gemäß Anspruch 1 gelöst.

Vorteilhafte und zweckmäßige Weiterbildungen der Aufgabenlösungen sind in den Unteransprüchen angegeben.

Die erfindungsgemäße Golfbag-Trolley-Kombination nebst Haube besteht aus einem steifen, stoßfesten Material, insbesondere aus einem steifen und stoßfesten Kunststoffspritzteil - ohne abstehende Teile. Die Trolley-Räder und die das Fahrgestell bildenden Streben der Räder können im Golfbag-Korpus hinter einer verriegelbaren. Tür verstaut werden, so dass die Golfbag-Trolley-Kombination für den Transport im Flugzeug, Zug oder Auto eine glatte Außenfläche ohne abstehende beschädigungsanfällige Teile aufweist. Für den Spielbetrieb werden die Streben mit den daran angebrachten Rädern einfach in Aufnahmelöcher eingesteckt, die im Bag-Korpus ausgebildet sind.

Die Golfschläger sind übersichtlich vorzugsweise U-förmig nebeneinander in einer Lochplatte und separat voneinander angeordnet und schlagen nicht aneinander. Ein ausziehbarer Griff vorzugsweise mit Scorekartenhalter ist ebenfalls in das Golfbag integriert. Die Haube schützt nicht nur die Schläger, sondern auch den Griff inklusive Scorekartenhalter. Die Räder können für den leichteren Transport der Golfbag-Trolley-Kombination durch den Golfer bzw. die Golferin im Flughafengelände oder -gebäude oder auf dem Bahnhof etc. einfach und schnell am Golfbag angebracht werden und ebenso leicht wieder verstaut werden. Die Haube übergreift im aufgesetzten Zustand nicht nur den Bag-Korpus sondern auch die Tür und sichert damit die Tür vor unbeabsichtigtem Öffnen. Die Haube selbst kann durch beliebige Mittel, insbesondere aber durch mehrere Schrauben mit wenigen Gewindegängen mit dem Golfbag-Korpus sicher verbunden werden, wobei die Schraubköpfe vorzugsweise versenkt und nicht vorstehend angeordnet sind.

Am Golfbag können zur Anbringung von Taschen etc. eventuell auch zur Anbringung der abgenommenen Haube Ösen angebracht sein, die vorzugsweise einklappbar in Ausnehmungen angeordnet sind. Hinter der Tür ist reichlich weiterer Stauraum vorhanden, welcher ggf. durch eine außen lösbar anbringbare Schürze vergrößert werden kann. Auf anfällige Reißverschlüsse, Druckknopfverschlüsse u. ä. kann verzichtet werden.

Damit schafft die Erfindung eine stabile und dennoch leichte Golfbag-Trolley-Kombination, die vorzüglich gleichermaßen für das Fairway als auch für den Transport geeignet ist und insbesondere die Golfschläger beim Transport optimal schützt und mit wenigen Handgriffen vom Fairway-Betrieb auf Transportbetrieb und umgekehrt umgestellt werden kann.

Die Erfindung soll nachfolgend anhand der beigefügten Zeichnung, in der ein Ausführungsbeispiel dargestellt ist, näher erläutert werden.

Es zeigen
- Fig. 1: schematisch eine Explosionsdarstellung einer erfindungsgemäß ausgebildeten Golfbag-Trolley-Kombination,
- Fig. 2: eine für den Transport vorbereitete Golfbag-Trolley-Kombination ohne Tür,
- Fig. 3: die Golfbag-Trolley-Kombination nach Fig. 2 mit angesteckten Rädern und geschlossener Tür und
- Fig. 4: die für den Fairway-Betrieb vorbereitete Golfbag-Trolley-Kombination nach Fig. 1.

Gleiche Bauteile in den Figuren der Zeichnung sind mit den gleichen Bezugszeichen versehen.

Die Zeichnung zeigt eine Golfbag-Trolley-Kombination 1 mit einem Bag-Korpus 2 aus einem länglichen, quaderförmigen im Schnitt U-förmigen Hohlkörper 4. Der Hohlkörper 4 weist zwei schenkelseitige Wände 6, 8, eine stegseitige Wand 10, einen Boden 12, eine offene Seite 14, die mit einer Tür 16 verschließbar ist, und eine offene Oberseite 18 auf. Die Tür 16 ist mittels Scharnieren 17 schwenkbar mit dem Bag-Korpus 2 verbunden und ist beispielsweise mit Hilfe von versenkt angeordneten Drehriegeln 19 mit dem Bag-Korpus verriegelbar. Die Wandung des U-förmigen Hohlkörpers 4 ist doppelwandig ausgebildet und weist eine Außenwand 20 und eine dazu beabstandete Innenwand 22 auf. Zwischen der Außenwand 20 und der Innenwand 22 ist ein im Querschnitt U-förmiger Hohlraum 24 gebildet, welcher oben offen und unten durch den Boden 12 verschlossen ist, wobei die freien Enden der Außenwand 20 und Innenwand 22 miteinander durch schmale Wände 26, 28 verbunden sind.

Auf der offenen Oberseite 18 befindet sich eine Lochplatte 30 zum Einführen der Golfschlägerschäfte, deren Löcher 32 randseitig ausgebildet sind und mit dem Hohlraum 24 fluchten, welcher mit Unterteilungen (nicht dargestellt) versehen sein kann, die mit den Löchern ausgerichtet sind.

Auf die Oberseite 18 des Hohlkörpers 4 ist eine Haube 34 aufsetzbar, die mit dem Hohlkörper lösbar verbunden werden kann.

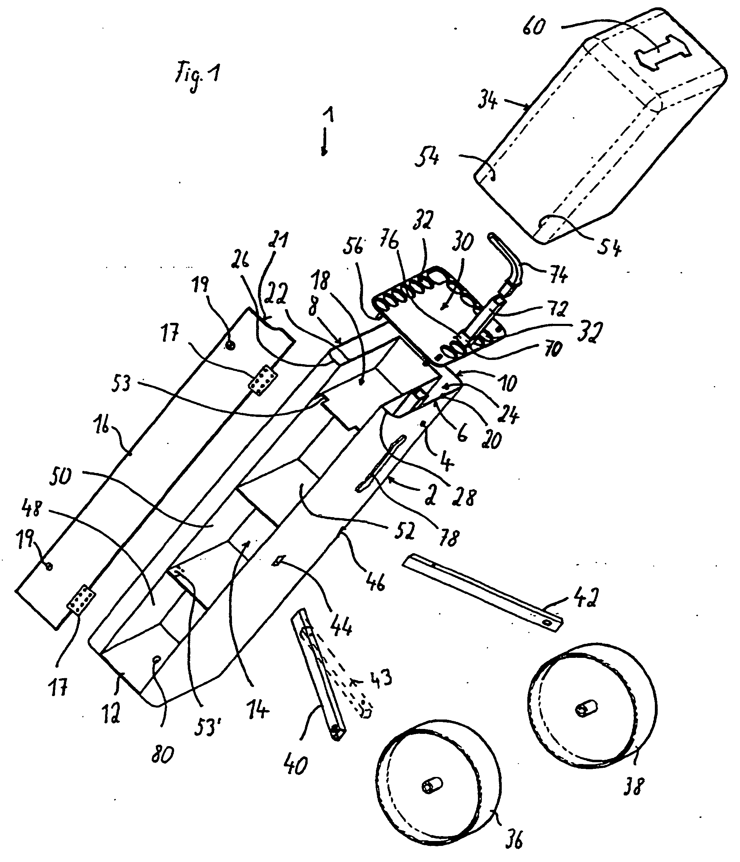

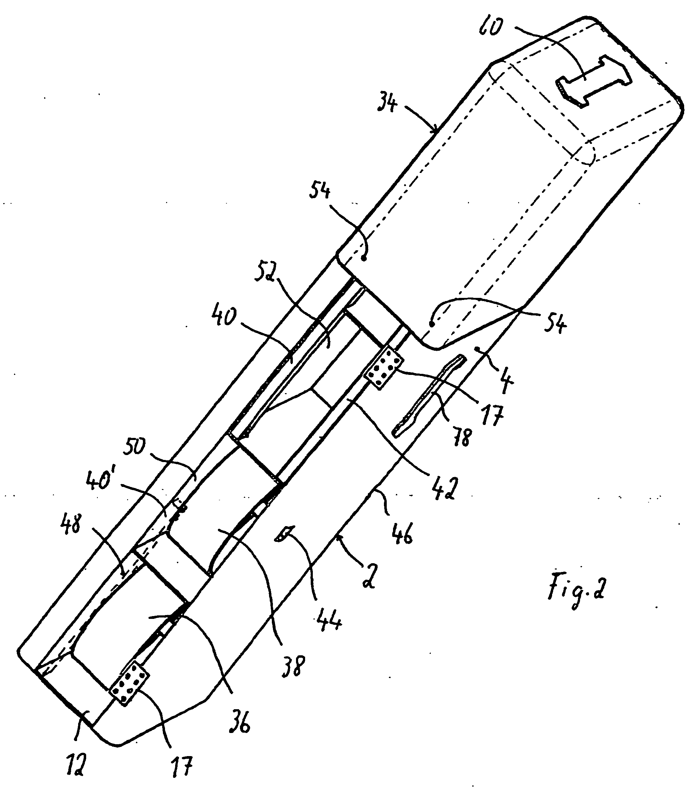

Es sind zwei im Hohlkörper 4 verstaubare Räder 36, 38 vorgesehen, die jeweils an einer ebenfalls im Hohlkörper verstaubaren Strebe 40, 42 drehbar anbringbar sind, vgl. Fig. 2. Zum Verstauen der Räder und der Streben sind Fächer 48, 50, 52 im Hohlkörper ausgebildet, die über die Tür 16 zugänglich sind. Die Streben können vorzugsweise in in einem Fachboden ausgebildete Ausnehmungen 53, 53' eingestellt werden, vgl. Fig. 1 und 2. Die Streben können in in der Hohlkörperwandung ausgebildete Aufnahmelöcher 44, 46 eingesteckt werden, wobei, falls erforderlich, Rastelemente vorgesehen sein können. Im Hohlkörper 4 können weitere Fächer als zusätzlicher Stauraum für andere Gegenstände vorgesehen werden.

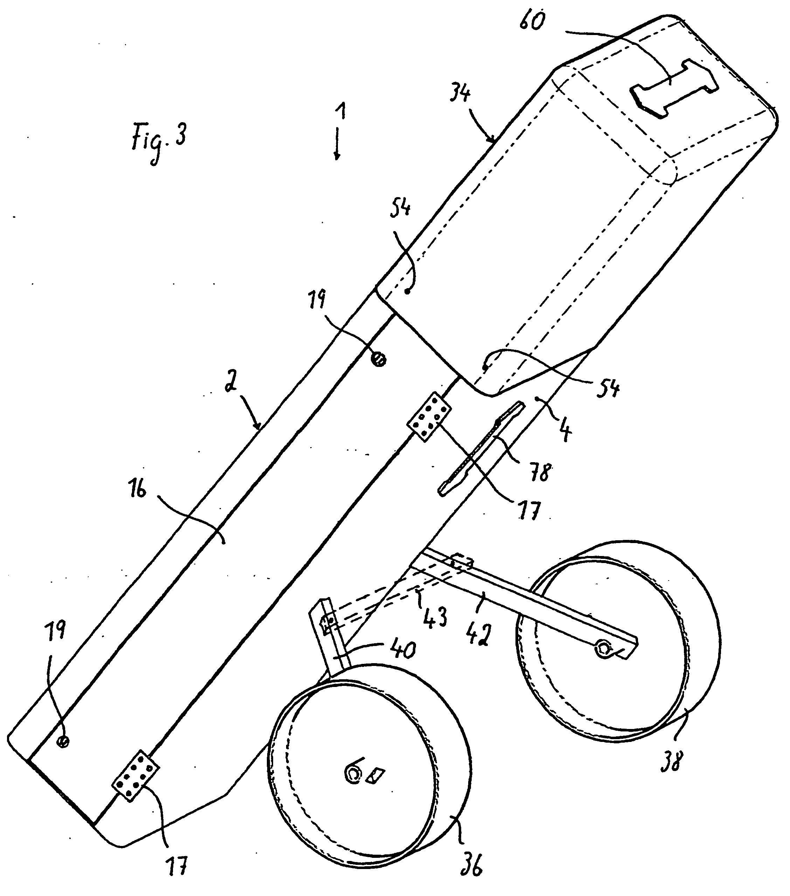

Die Tür 16 weist oberseitig eine Griffausnehmung 21 auf. Die Haube 34 ist so ausgebildet, dass sie im aufgesetzten Zustand den oberen Rand des Hohlkörpers 4 und den oberen Rand der Tür 16 und die Griffausnehmung 21 übergreift, wodurch die Tür 16 gegen unbeabsichtigtes Öffnen gesichert ist. Die Haube 34 weist vorzugsweise die gleichen Außenabmessungen auf wie der Hohlkörper 4 und ist am Öffnungsrand mit einer innenseitig umlaufenden stufenförmigen Ausnehmung versehen (nicht dargestellt). Analog sind der Hohlkörper 4 und die Tür 16 an ihrer offenen Oberseite 18 mit einer außenseitigen umlaufenden stufenförmigen Ausnehmung versehen (nicht dargestellt), derart, dass die Außenflächen der Wandung der auf den Hohlkörper aufgesetzten Haube bündig mit den Außenflächen der Wandung des Hohlkörpers abschließt, vgl. Fig. 2 und 3.

Die Haube 34 ist beispielsweise mittels Schraubverschlüssen 54 mit dem Hohlkörper 4 verbindbar. Die Schrauben sind dabei vorzugsweise in Ausnehmungen angeordnet, so dass sie nicht vorstehen. Die Haube weist einen Griff 60 auf, insbesondere zum Ziehen des mit der Haube verschlossenen Golfbags mit montierten Rädern 36, 38, vgl. Fig. 3.

Die Lochplatte 30 weist unterseitig vorzugsweise Führungen 56 auf, die in den Hohlraum 24 einführbar sind zur verdrehsicheren Anordnung der Lochplatte. Die Lochplatte 30 weist ferner eine Bohrung 70 zur Aufnahme einer Griffstange 72 mit Griff 74 auf. Die Griffstange 72 ist vorzugsweise teleskopartig ausziehbar und einschiebbar und kann für unterschiedliche Auszugslängen mit Arretierungen oder Feststelleinrichtungen versehen sein. Das Bezugszeichen 76 bezeichnet eine Führung für die Griffstange 72.

Der Hohlkörper 4 kann außenseitig, mit einem Tragegriff 78 versehen sein. Die Griffe 60, 78 an der Haube 34 und dem Hohlkörper 4 können eingelassen oder in Ausnehmungen eindrückbar sein.

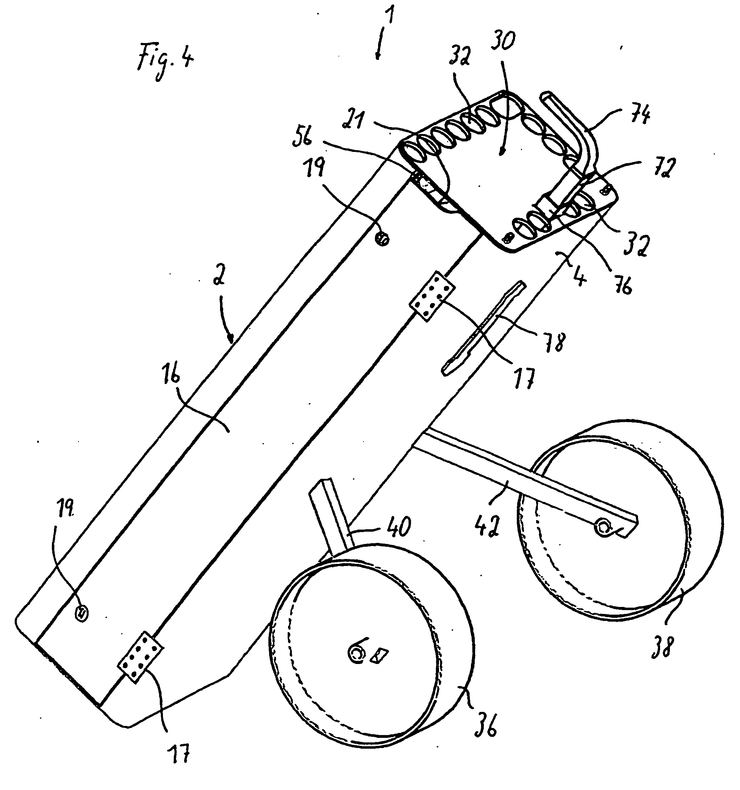

Die Aufnahmelöcher 44, 46 für die Streben 40, 42 der Räder 36, 38 sind randseitig im Hohlkörper 4 ausgebildet und verlaufen vorzugsweise schräg einwärts, so dass die eingesetzten Streben 40, 42 in der Fahrstellung schräg auswärts gespreizt angeordnet sind, vgl. Fig. 3 und 4.

Die Fahrgestellstreben 40, 42 sind in der Fahrstellung (s. Fig. 3) vorzugsweise mit einer Querstrebe 43 lösbar oder drehbar miteinander verbindbar, um das Fahrgestell zu versteifen und um im Fahrbetrieb die Gefahr eines Auseinanderspreizens der Streben sicher zu vermeiden. Die Querstrebe 43 kann mit beiden Fahrgestellstreben 40 und 42 drehbar verbunden sein oder kann mit einer Fahrgestellstrebe 40 oder 42 drehbar verbunden sein und für den Fahrbetrieb mit der anderen Fahrgestellstrebe 42 oder 40 lösbar mittels geeigneter Mittel verbunden werden. Die Fahrgestellstreben 40, 42 können mit angeklappter Querstrebe oder ohne Querstrebe 43 in einem Radfach 48 oder 50 zusammen mit einem Rad oder beiden Rädern 36, 38 oder auf zwei Radfächer 48, 50 verteilt zusammen mit den Rädern 36, 38 verstaubar sein, was schematisch in der Fig. 2 für eine Fahrgestellstrebe 40' gestrichelt eingezeichnet ist.

Der Bag-Korpus 2 und die Haube 34 bestehen aus einem steifen, stoßfestem Kunststofformteil bzw. Kunststoffspritzteil.

Außer rechteckförmig kann der Hohlkörper 4 im Schnitt auch kreisförmig, oval oder trapezförmig ausgebildet sein.

Die erfindungsgemäße Golfbag-Trolley-Kombination ist preiswert, sehr stabil und robust und mit geringem Gewicht herstellbar.

Der Boden 12 ist zur Belüftung und zum Wasserablauf mit wenigstens einem Loch 80 ausgestattet, vgl. Fig. 1.

## Patentansprüche

1. Golfbag-Trolley-Kombination mit
- einem Bag-Korpus zur Aufnahme von Golfschlägern, wobei der Bag-Korpus (2) einen länglichen, steifen, stoßfesten Hohlkörper (4) mit seitlichen Außenwänden (20), einem Boden (12) und einer offenen Oberseite (18) aufweist,
- wenigstens einem im Hohlkörper (4) vorgesehenen Staufach (48,50, 52), das über eine in einer Außenwand des Hohlkörpers (4) ausgebildete längliche, verschließbare Öffnung (14) zugänglich ist,
- einem in einem Staufach verstaubaren Fahrwerk, das zwei an Streben (40, 42) angeordnete Räder (36, 38) aufweist,
- einer zur Außenwand (20) beabstandeten Innenwand (22), wobei zwischen der Innen- und Außenwand ein oben offener Hohlraum (24) gebildet ist,
- einer auf der Oberseite (18) angeordneten Lochplatte (30) zum Einführen der Golfschlägerschäfte, deren Löcher (32) randseitig ausgebildet sind und mit dem Hohlraum (24) fluchten, und
- einer auf die Oberseite (18) des Hohlkörpers (4) aufsetzbaren, steifen, stoßfesten Haube (34),
**dadurch gekennzeichnet, dass**
- die Räder (36, 38) und die Streben (40, 42) lösbar miteinander verbunden sind und für den Transport getrennt in den Staufächern (48, 50) verstaubar sind,
- die Streben (40, 42) für die Fahrstellung in in einer Hohlkörperwand ausgebildete Aufnahmelöcher (44, 46) einsteckbar sind und
- sich die Innenwand (22) bis zu dem Boden (12) erstreckt und der zwischen der Außenwand (20) und der Innenwand (22) gebildete Hohlraum (24) zur Aufnahme der Golfschlägerschäfte unten durch den Boden (12) verschlossen ist.

2. Golfbag-Trolley-Kombination nach Anspruch 1, **dadurch gekennzeichnet, dass** weitere Staufächer zur Aufnahme weiterer Gegenstände vorgesehen sind.

3. Golfbag-Trolley-Kombination nach Anspruch 2, **dadurch gekennzeichnet, dass** die Staufächer (48, 50, 52) im Hohlkörper übereinander angeordnet sind.

4. Golfbag-Trolley-Kombination nach Anspruch 1, **dadurch gekennzeichnet, dass** die Streben (40, 42) in in einem Staufachboden wandseitig ausgebildete Ausnehmungen (53, 53') einstellbar sind.

5. Golfbag-Trolley-Kombination nach Anspruch 1, **dadurch gekennzeichnet, dass** die Aufnahmelöcher (44, 46) für die Streben (40, 42) randseitig ausgebildet sind.

6. Golfbag-Trolley-Kombination nach Anspruch 1 oder 4, **dadurch gekennzeichnet, dass** die Aufnahmelöcher (44, 46) für die Streben (40, 42) schräg einwärts verlaufen, derart, dass die eingesteckten Streben (40, 42) der Ränder (36, 38) schräg auswärts gerichtet sind.

7. Golfbag-Trolley-Kombination nach Anspruch 1, **dadurch gekennzeichnet, dass** die Öffnung (14) mit einer Tür (16) verschließbar ist.

8. Golfbag-Trolley-Kombination nach einem der vorherigen Ansprüche, **dadurch gekennzeichnet, dass** die Haube (34) im aufgesetzten Zustand den oberen Rand des Hohlkörpers (4) und den oberen Bereich der Öffnung (14) und der Tür (16) übergreift.

9. Golfbag-Trolley-Kombination nach Anspruch 8, **dadurch gekennzeichnet, dass** die Haube (34) die gleichen Außenabmessungen wie der Hohlkörper (4) hat und eine innenseitig umlaufende stufenförmige Ausnehmung aufweist und der Hohlkörper (4) und die Tür (16) an ihrer Oberseite eine außenseitig umlaufende stufenförmige Ausnehmung aufweisen, derart, daß die Außenfläche der Wandung der auf den Hohlkörper aufgesetzten Haube bündig mit der Außenfläche der Wandung des Hohlkörpers und der Tür abschließt.

10. Golfbag-Trolley-Kombination nach einem der vorherigen Ansprüche, **dadurch gekennzeichnet, dass** die Haube (34) mittels Schraubverschlüssen (54) mit dem Hohlkörper (4) bzw. Bag-Korpus (2) verbindbar ist.

11. Golfbag-Trolley-Kombination nach einem der vorherigen Ansprüche, **dadurch gekennzeichnet, dass** die Lochplatte (30) unterseitig Führungen (56) aufweist, die in den Hohlraum (24) einführbar sind zur verdrehsicheren Anordnung der Lochplatte.

12. Golfbag-Trolley-Kombination nach einem der vorherigen Ansprüche, **dadurch gekennzeichnet, dass** die Lochplatte (30) mit einer Bohrung (70) zur Aufnahme einer Griffstange (72) mit Griff (74) versehen ist.

13. Golfbag-Trolley-Kombination nach Anspruch 12, **dadurch gekennzeichnet, daß** die Griffstange (72) teleskopartig ausziehbar und einschiebbar ist.

14. Golfbag-Trolley-Kombination nach Anspruch 13, **dadurch gekennzeichnet, dass** die Griffstange (72) mit Arretierungen oder Feststelleinrichtungen für unterschiedliche Auszugslängen versehen ist.

15. Golfbag-Trolley-Kombination nach einem der vorherigen Ansprüche, **dadurch gekennzeichnet, dass** die Haube (34) mit einem Griff (60) zum Ziehen des mit montierten Rädern (36, 38) versehenen Bag-Korpus (2) ausgestattet ist.

16. Golfbag-Trolley-Kombination nach einem der vorherigen Ansprüche, **dadurch gekennzeichnet, dass** der Hohlkörper (4) außenseitig einen Tragegriff (78) aufweist.

17. Golfbag-Trolley-Kombination nach Anspruch 15 oder 16, **dadurch gekennzeichnet, dass** die Griffe (60, 78) eingelassen oder in Ausnehmungen eindrückbar sind.

18. Golfbag-Trolley-Kombination nach einem der vorherigen Ansprüche, **dadurch gekennzeichnet, dass** der Bag-Korpus (2) im Schnitt rechteckförmig, trapezförmig oder oval ausgebildet ist.

19. Golfbag-Trolley-Kombination nach einem der vorherigen Ansprüche, **dadurch gekennzeichnet, dass** der Boden (12) mit wenigstens einem Loch (80) zur Belüftung und zum Wasserablauf ausgestattet ist.

20. Golfbag-Trolley-Kombination nach einem der vorherigen Ansprüche, **dadurch gekennzeichnet, dass** die Tür (16) an der Oberkante eine Griffausnehmung (21) aufweist, die von der montierten Haube (34) übergriffen wird.

21. Golfbag-Trolley-Kombination nach einem der vorherigen Ansprüche, **dadurch gekennzeichnet, dass** der Hohlkörper (4) des Bag-Korpus (2) im Querschnitt etwa U-förmig ausgebildet ist.

22. Golfbag-Trolley-Kombination nach einem der vorherigen Ansprüche, **dadurch gekennzeichnet, dass** der Hohlraum (24) im Querschnitt etwa U-förmig ausgebildet ist und an seinen Schenkelenden geschlossen ist.

23. Golfbag-Trolley-Kombination nach einem der vorherigen Ansprüche, **dadurch gekennzeichnet, dass** die Löcher (32) der Lochplatte (30) U-förmig angeordnet sind.

## Claims

1. Golf bag and trolley combination with
a bag unit for the reception of golf clubs, said bag unit (2) comprising a longitudinal, rigid, shock-resistant hollow body (4) with lateral external walls (20), a base (12) and an open upper side (18),
- at least one storing compartment (48, 50, 52) provided inside the hollow body (4), which is accessible via a longitudinal lockable opening (14) formed in an external wall of the hollow body (14),
- a chassis comprising two wheels (36, 38) arranged on struts (40, 42) that may be stored in a storing compartment,
- an internal wall (22) arranged at a distance from the external wall (20), whereby a cavity (24), which is open at its top, is formed between the inner and outer walls,
- a hole plate (30) arranged on the top (18) for introducing the golf club shafts, the holes (32) of which are arranged around the boundary and run into the cavity (24), and
- a rigid, shock-resistant hood (34) which may by placed on the upper side (18) of the hollow body (4),
**characterized in that**
- the wheels (36, 38) and the struts (40, 42) are detachably interconnected and may be separately stowed away in the storing compartments (48, 50),
- the struts (40, 42) may by inserted into the housing holes (44, 46) embodied in a hollow body wall in order to obtain the driving position, and
- the inner wall (22) extends to the base (12), and the cavity (24) formed between the external wall (20) and the internal wall (22) for receiving the golf club shafts is sealed by the base (12) at its bottom.

2. Golf bag and trolley combination according to claim 1, **characterized in that** further storing compartments for receiving further objects are provided.

3. Golf bag and trolley combination according to claim 2, **characterized in that** the storing compartments (48, 50, 52) are arranged on top of each other inside the cavity.

4. Golf bag and trolley combination according to claim 1, **characterized in that** the struts (40, 42) are adjustable in receptions (53, 53') formed at the wall side in the bottom of a storing compartment.

5. Golf bag and trolley combination according to claim 1, **characterized in that** the housing holes (44, 46) for the struts (40, 42) are arranged around the boundary.

6. Golf bag and trolley combination according to claim 1 or 4, **characterized in that** the housing holes (44, 46) for the struts (40, 42) run obliquely towards the inside, such that the introduced struts (40, 42) of the wheels are obliquely directed to the outside.

7. Golf bag and trolley combination according to claim 1, **characterized in that** the opening (14) may be closed with a door.

8. Golf bag and trolley combination according to one of the preceding claims, **characterized in that** the hood (34), when placed on the top, overlaps the upper boundary of the hollow body (4) and the upper region of the opening (14) and the door (16).

9. Golf bag and trolley combination according to claim 8, **characterized in that** the hood (34) has the same external dimensions as the hollow body (4) and is provided with a stepped reception circulating on the inside, and the hollow body (4) and the door (16) are provided at their upper side with a reception circulating on the outside, such that the external face of the hood's wall placed on the hollow body is level with the external face of the hollow body's outer wall and the door.

10. Golf bag and trolley combination according to one of the preceding claims, **characterized in that** the hood (34) may be connected to the hollow body or the bag unit, respectively, by means of screwed plugs (54).

11. Golf bag and trolley combination according to one of the preceding claims, **characterized in that** the hole plate (30) is at its lower side provided with guides (56), which may be introduced into the cavity (24) for a torsion-resistant arrangement of the hole plate.

12. Golf bag and trolley combination according to one of the preceding claims, **characterized in that** the hole plate (30) is provided with a drilling (70) for receiving a handle rod (72) with a handle (74).

13. Golf bag and trolley combination according to claims 12, **characterized in that** the handle rod (72) may be telescopically extended and retracted.

14. Golf bag and trolley combination according claim 13, **characterized in that** the handle rod (72) is provided with lockings or fixing devices for varying lengths of extension.

15. Golf bag and trolley combination according to one of the preceding claims, **characterized in that** the hood (34) has a handle (60) for dragging the bag unit (2) which is provided with mounted wheels (36, 38).

16. Golf bag and trolley combination according to one of the preceding claims, **characterized in that** the hollow body (4) is on its outside provided with a carrying handle (78).

17. Golf bag and trolley combination according to claim 15 or 16, **characterized in that** the handles (60, 78) are countersunk or may be pressed into recesses.

18. Golf bag and trolley combination according to one of the preceding claims, **characterized in that** the cross section of the bag unit (2) is rectangular, trapezoidal or oval.

19. Golf bag and trolley combination according to one of the preceding claims, **characterized in that** the base (12) is provided with at least one hole (80) for aerating and draining off water.

20. Golf bag and trolley combination according to one of the preceding claims, **characterized in that** the door (16) is provided at its upper edge with a handle recess (21) overlapped by the mounted hood (34).

21. Golf bag and trolley combination according to one of the preceding claims, **characterized in that** the hollow body (4) of the bag unit (2) has an almost U-shaped cross section.

22. Golf bag and trolley combination according to one of the preceding claims, **characterized in that** the cavity (24) has an almost U-shaped cross section and is sealed at its side ends.

23. Golf bag and trolley combination according to one of the preceding claims, **characterized in that** the holes (32) of the hole plate (30) are arranged in a U-shaped manner.

## Revendications

1. Ensemble sac et chariot de golf, comportant
- un corps de sac (2) destiné à recevoir des clubs de golf, ledit corps de sac (2) étant formé par un corps creux (4) allongé, rigide, résistant aux chocs, comportant des parois extérieures latérales (20), un fond (12) et une face supérieure (18) ouverte,
- au moins un compartiment de rangement (48, 50, 52), prévu dans le corps creux (4) et accessible par une ouverture (14) allongée et apte à être fermée, réalisée dans une paroi extérieure du corps creux (4),
- un châssis de roulement, qui peut être rangé dans un compartiment de rangement et qui comporte deux roues (36, 38) montées sur des entretoises (40, 42),
- une paroi intérieure (22), écartée de la paroi extérieure (20), un espace vide (24) ouvert vers le haut étant formé entre la paroi intérieure et la paroi extérieure,
- une plaque perforée (30), agencée sur la face supérieure (18) pour recevoir les manches des clubs de golf et dont les trous (32) sont réalisés sur le bord et sont disposés en alignement avec l'espace vide (24), et
- un capot (34), rigide et résistant aux chocs, apte à être posé sur la face supérieure (18) du corps creux (4),
**caractérisé en ce que**
- les roues (36, 38) et les entretoises (40, 42) sont assemblées de manière amovible entre elles et sont aptes à être rangées séparément pour le transport dans les compartiments de rangement (48, 50),
- pour la position de roulement, les entretoises (40, 42) peuvent être enfichées dans des trous de réception (44, 46), réalisés dans une paroi du corps creux, et
- la paroi intérieure (22) s'étend jusqu'au fond (12) et l'espace vide (24), formé entre la paroi extérieure (20) et la paroi intérieure (22) et destiné à recevoir les manches des clubs de golf, est fermé en bas par le fond (12).

2. Ensemble sac et chariot de golf selon la revendication 1, **caractérisé en ce que** sont prévus d'autres compartiments de rangement destinés à recevoir d'autres objets.

3. Ensemble sac et chariot de golf selon la revendication 2, **caractérisé en ce que** les compartiments de rangement (48, 50, 52) sont superposés dans le corps creux.

4. Ensemble sac et chariot de golf selon la revendication 1, **caractérisé en ce que** les entretoises (40, 42) peuvent être posées dans des évidements (53, 53') réalisés dans le fond d'un compartiment de rangement du côté de la paroi.

5. Ensemble sac et chariot de golf selon la revendication 1, **caractérisé en ce que** les trous de réception (44, 46) pour les entretoises (40, 42) sont réalisés du côté du bord.

6. Ensemble sac et chariot de golf selon la revendication 1 ou 4, **caractérisé en ce que** les trous de réception (44, 46) pour les entretoises (40, 42) sont orientés de manière inclinée vers l'intérieur, de telle sorte que les entretoises (40, 42) des roues (36, 38) sont insérées en étant orientées de manière inclinée vers l'extérieur.

7. Ensemble sac et chariot de golf selon la revendication 1, **caractérisé en ce que** l'ouverture (14) peut être fermée par une porte (16).

8. Ensemble sac et chariot de golf selon l'une quelconque des revendications précédentes, **caractérisé en ce que** le capot (34), dans la position montée, s'engage au-dessus du bord supérieur du corps creux (4) et du bord supérieur de l'ouverture (14) et de la porte (16).

9. Ensemble sac et chariot de golf selon la revendication 8, **caractérisé en ce que** le capot (34) a les mêmes dimensions extérieures que le corps creux (4) et comporte un évidement étagé périphérique du côté intérieur, et le corps creux (4) et la porte (16) comportent sur leur côté supérieur un évidement étagé périphérique du côté extérieur, de telle sorte que la face extérieure de la paroi du capot posé sur le corps creux est assemblée à fleur avec la face extérieure de la paroi du corps creux et de la porte.

10. Ensemble sac et chariot de golf selon l'une quelconque des revendications précédentes, **caractérisé en ce que** le capot (34) est destiné à être assemblé avec le corps creux (4) ou le corps du sac (2) au moyen d'assemblages à vis (54).

11. Ensemble sac et chariot de golf selon l'une quelconque des revendications précédentes, **caractérisé en ce que** la plaque perforée (30) comporte sur sa face inférieure des guidages (56) qui peuvent être introduits dans l'espace vide (24) pour immobiliser en rotation le montage de la plaque perforée.

12. Ensemble sac et chariot de golf selon l'une quelconque des revendications précédentes, **caractérisé en ce que** la plaque perforée (30) comporte une forure (70) destinée à recevoir un manche (72) avec une poignée (74).

13. Ensemble sac et chariot de golf selon la revendication 12, **caractérisé en ce que** le manche (72) est extractible et escamotable de manière télescopique.

14. Ensemble sac et chariot de golf selon la revendication 13, **caractérisé en ce que** le manche (72) est muni de dispositifs d'arrêt ou dispositifs d'immobilisation pour différentes longueurs d'extraction.

15. Ensemble sac et chariot de golf selon l'une quelconque des revendications précédentes, **caractérisé en ce que** le capot (34) est équipé d'une poignée (60) pour tirer le corps de sac (2) muni des roues (36, 38) montées.

16. Ensemble sac et chariot de golf selon l'une quelconque des revendications précédentes, **caractérisé en ce que** le corps creux (4) comporte du coté extérieur une poignée (78) pour le porter.

17. Ensemble sac et chariot de golf selon la revendication 15 ou 16, **caractérisé en ce que** les poignées (60, 78) sont encastrées ou sont escamotables dans des évidements.

18. Ensemble sac et chariot de golf selon l'une quelconque des revendications précédentes, **caractérisé en ce que** le corps de sac (2) est réalisé avec une section rectangulaire, trapézoïdale ou ovale.

19. Ensemble sac et chariot de golf selon l'une quelconque des revendications précédentes, **caractérisé en ce que** le fond (12) comporte au moins un trou (80) destiné à l'aération et à l'écoulement de l'eau.

20. Ensemble sac et chariot de golf selon l'une quelconque des revendications précédentes, **caractérisé en ce que** la porte (16) comporte sur le bord supérieur un évidement formant poignée (21) qui est masqué par le capot (34) en position montée.

21. Ensemble sac et chariot de golf selon l'une quelconque des revendications précédentes, **caractérisé en ce que** le corps creux (4) du corps du sac (2) est réalisé avec une section sensiblement en forme de U.

22. Ensemble sac et chariot de golf selon l'une quelconque des revendications précédentes, **caractérisé en ce que** l'espace vide (24) est réalisé avec une section sensiblement en forme de U et est fermé au niveau des extrémités de ses branches.

23. Ensemble sac et chariot de golf selon l'une quelconque des revendications précédentes, **caractérisé en ce que** les trous (32) de la plaque perforée (30) sont agencés en formant un U.
